# EUROPÄISCHE PATENTSCHRIFT

(11) **EP 2 938 494 B1**
(45) Veröffentlichungstag und Bekanntmachung des Hinweises auf die Patenterteilung: **19.07.2017**
(21) Anmeldenummer: 13802030.0
(22) Anmeldetag: 05.12.2013
(51) Int. Cl.: B32B 38/14, B32B 38/00

(54) **VERFAHREN ZUR HERSTELLUNG EINES DRUCKUNTERGRUNDES SOWIE EINES DIREKT BEDRUCKTEN DEKORPANEELS**
METHOD FOR PRODUCING A PRINTING SUBSTRATE AND PRINTING SUBSTRATE RESULTING THEREFROM
PROCÉDÉ DESTINÉ À LA FABRICATION D'UN SUBSTRAT D'IMPRESSION ET SUBSTRAT D'IMPRESSION AINSI OBTENU

(30) Priorität: 28.12.2012 EP 12199682; 24.07.2013 EP 13177791
(43) Veröffentlichungstag der Anmeldung: 04.11.2015
(73) Patentinhaber: Surface Technologies GmbH & Co. KG, 15837 Baruth (DE)
(72) Erfinder: HANNIG, Hans-Jürgen, 51427 Bergisch Gladbach (DE)
(74) Vertreter: Michalski Hüttermann & Partner Patentanwälte mbB
(86) Internationale Anmeldenummer: PCT/EP2013/075627
(87) Internationale Veröffentlichungsnummer: WO 2014/102046

(56) Entgegenhaltungen:
- EP-A2- 2 386 408
- WO-A1-2008/122668
- DE-A1-102007 019 851
- DE-A1-102007 062 941

## Beschreibung

Die vorliegende Erfindung betrifft ein Verfahren zur Herstellung eines Druckuntergrundes zum Direktdruck auf einem Dekorpaneel. Darüber hinaus betrifft die vorliegende Erfindung ein Dekorpaneel, welches einen nach einem erfindungsgemäßen Verfahren hergestellten Druckuntergrund aufweist. Insbesondere betriff die Anmeldung dabei ein Verfahren zur Herstellung eines direktbedruckten Dekorpaneels ohne Gegenzug sowie ein Dekorpaneel, welches nach dem erfindungsgemäßen Verfahren ohne Gegenzug hergestellten wurde.

DE-A-10,2007,019851 zeigt einen bekannten Stand der Technik. Unter dem Begriff Dekorpaneel sind im Sinne der Erfindung Wand-, Decken, oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.
Beispiele für solche nachempfundenen Naturwerkstoffe sind Holzart wie z.B. Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Zur Vermeidung der Verformung der Dekorpaneele, dem sogenannten Schüsseln, durch Schrumpfungseffekte des aufgebrachten Dekorpapiers wird nachdem auf der dem Dekorpapier gegenüberliegenden Seite der Trägerplatte ein Gegenzugpapier aufgebracht und der erhaltene Schichtenaufbau unter Verwendung geeigneter druck- und/oder wärmeaktivierter Klebemittel fest miteinander verbunden. Die durch den Gegenzug auf die Trägerplatte einwirkenden Kräfte sollen dabei den das Schüsseln verursachenden Zugkräften entgegenwirken.

Das Aufbringen des Gegenzuges bedingt dabei einen weiteren Arbeitsschritt und damit einhergehend weitere Produktionskosten.

In Anhängigkeit des gewünschten Einsatzbereiches der Dekorpaneele können diese aus unterschiedlichen Materialen gefertigt sein. Insbesondere kann dabei das Material des Trägers in Abhängigkeit des Einsatzbereichs gewählt sein. So kann der Träger beispielsweise aus einem Holzwerkstoff bestehen, sofern das Dekorpaneele keiner übermäßigen Feuchtigkeit oder Witterungsbedingungen ausgesetzt ist. Soll das Paneel hingegen z.B. in Feuchträumen oder im Außenbereich eingesetzt werden, kann der Träger beispielsweise aus einem Kunststoff bestehen.

Holzwerkstoffe im Sinne der Erfindung sind dabei neben Vollholzwerkstoffen auch Materialien wie z.B. Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Kunststoffe, welche bei der Herstellung entsprechender Paneele eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Oberflächenbeschichtung bzw. der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Im Sinne der Erfindung sind unter dem Begriff Faserwerkstoffe Materialien wie z.B. Papier und Vliese auf Basis pflanzlicher, tierische, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern, Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind aus Mineralwolle oder Glaswolle.

Zum Schutz der aufgebrachten Dekorschicht sind in der Regeln Verschleiß- oder Deckschichten oberhalb der Dekorschicht aufgebracht. Eine Verschleiß- und/oder Deckschicht im Sinne der Erfindung ist eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen, wie beispielsweise Abrieb, schützt.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Ein Problem, welches beim direkten Bedrucken von Dekorpaneelen auftreten kann, ist, dass die zu bedruckende Oberfläche des Dekorpaneels keinen optimalen Druckuntergrund darstellt, auf welchen ein entsprechendes Dekor aufgebracht werden kann. Dabei besteht das Problem, dass ein als Druckuntergrund auf eine Trägerplatte eines Dekorpaneels aufgebrachte Papier- oder Vliesschicht durch das zur Aufbringung verwendete Harz derart penetriert wird, dass das zur Befestigung aufgetragene Harz auf der zur Bedruckung vorgesehenen Seite des Papiers oder Vlies durchschlägt und dort zu Haftungsproblemen der Druckfarbe führen kann. Zur Überwindung dieses Problem kann es vorgesehen sein, dass Papier oder Vlies mit einer Sperrschicht zur versehen, die ein Durchschlagen des Harzes verhindert. Eine solche Sperrschicht führt jedoch vielfach dazu, dass die beim Druck aufgebrachte Tinte nicht oder nicht hinreichend auf das Papier oder Vlies aufzieht, sondern auf der Oberfläche stehenbleibt, was sich nachteilig auf die Qualität des Druckes auswirkt. Desweiteren kann es vorgesehen sein, dass das Papier oder Vlies vor dem Aufbringen auf die Trägerplatte auf der zu bedruckenden Seite mit einer Farbaufnahmeschicht versehen wird, auf welche dann gedruckt wird. Das so hergestellte Dekorpapier wird dann auf die Trägerplatte aufgebracht. Bei der anschließenden Aufbringung einer Deck- oder Verschleißschicht kann es jedoch zu Haftungsproblemen kommen, so dass der letztendliche Laminatverbund keine ausreichende Stabilität aufweist und es z.B. zur Aufspaltung des Laminats in der Dekorpapierschicht kommt.

DE 10 2007 062 941 A1 offenbart ein Verfahren zur Herstellung eines dekorierten Laminats mit einem plattenförmigen Kern aus Holz oder Holzwerkstoff, einer Dekorschicht auf mindestens einer Seite des Kerns und einer Deckschicht aus Aminoplast auf der Dekorschicht, umfassend die Schritte -Anbringen der Dekorschicht, - Auftragen einer Schicht aus einer wässrigen Lösung einer Aminoplast-Vorstufe zur Bildung einer Deckschicht auf die Dekorschicht, - zumindest teilweises Trocknen der Deckschicht, - Aushärten des Aminoplastes unter Druck und Wärme, wobei zunächst ein Teil der Lösung der Aminoplast-Vorstufe aufgetragen und die so erzeugte Teilschicht angetrocknet wird und dieser Schritt mindestens zweimal wiederholt wird, um die endgültige Deckschicht zu bilden.

EP 2 386 408 A2 offenbart eine einer Bauplatte mit einem Grundkörper mit poröser Oberfläche und einer auf die poröse Oberfläche und Zwischenanordnung eines aushärtbaren Bindemittels aufgebrachten Papierbahn wird die auf den Grundkörper aufgebrachte Papierbahn mittels eines programmierbaren Druckverfahrens, insbesondere Tintenstrahldruckverfahrens mit wenigstens einer Färbeflüssigkeit bedruckt, wobei die Färbeflüssigkeit zusätzlich zu ihren Färbeeigeschaften eine Haftung vermittelnde Eigenschaften aufweist, so dass bis an die Oberfläche der Papierbahn durchgedrungenes Bindemittel neutralisiert wird.

Dies berücksichtigend ist es die Aufgabe der vorliegenden Erfindung, ein Verfahren zur Herstellung eines Druckuntergrundes zum Direktdruck auf einem Dekorpaneel anzugeben, welche das aus dem Stand der Technik bekannte Problem zu überwinden vermögen. Darüber hinaus ist es die Aufgabe der Erfindung, ein Dekorpaneel mit einem entsprechenden Druckuntergrund anzugeben. Insbesondere ist es die Aufgabe der vorliegenden Erfindung, ein Verfahren zur Herstellung eines direktbedruckten Dekorpaneels anzugeben, welches frei von einem Gegenzug ist sowie ein entsprechendes gegenzugfreies Dekorpaneel bereitzustellen.

Gelöst wird diese Aufgabe durch ein Verfahren gemäß Anspruch 1 sowie ein Dekorpaneel gemäß Anspruch 13. Ausgestaltungen der Erfindungen finden sich in den abhängigen Ansprüchen sowie der weiteren Beschreibung.
Erfindungsgemäß wird somit ein Verfahren zur Herstellung eines Druckuntergrundes zum Direktdruck auf einem Dekorpaneel vorgeschlagen, aufweisend die Verfahrensschritte:
a) Bereitstellen eines plattenförmigen Trägers;
b) Aufbringen einer Harzschicht auf den plattenförmigen Träger;
c) Aufbringen einer unbedruckten Papier- oder Vliesschicht auf den plattenförmigen Träger; und
d) Kalandrieren des entstandenen Schichtenaufbaus bei einer Temperatur zwischen ≥ 40° und ≤ 250°C, welches dadurch gekennzeichnet ist, dass nach dem Kalandrieren eine Harzzusammensetzung aufgebracht wird, welche zwischen ≥0,5 Gew.-% und ≤ 85 Gew.-%, vorzugsweise zwischen ≥1,0 Gew.-% und ≤ 80 Gew.-%, eines Feststoffes mit einem mittleren Korndurchmesser d₅₀ zwischen ≥0,1µm und ≤120µm, vorzugsweise zwischen ≥1µm und ≤100µm
und als Harzkomponente wenigstens eine Verbindung ausgewählt aus der Gruppe bestehend aus Melaminharz, Formaldehydharz, Harnstoffharz oder Mischungen dieser aufweist. Überraschender Weise hat sich gezeigt, dass die Aufbringung eines Druckuntergrundes mit einem entsprechenden Feststoffanteil nach dem Aufkalandrieren einer unbedruckten Papier- oder Vliesschicht geeignet ist, ein für einen anschließenden Direktdruck hervorragend geeignete Oberfläche bereitzustellen, welche darüber hinaus eine sehr gute Haftung zu einer anschließend aufgebrachten Deck- oder Verschleißschicht aufweist, so dass ein unter Anwendung des erfindungsgemäßen Verfahrens hergestelltes Laminat eine hohe Stabilität aufweist. Der angegebene Feststoffanteil der Harzzusammensetzung bezieht sich dabei auf die flüssige Harzzusammensetzung. Erfindungsgemäß kann es dabei insbesondere vorgesehen sein, dass die nach dem Kalandrieren aufgetragene Harzzusammensetzung die aufgebrachte Papier- oder Vliesschicht zumindest teilweise soweit penetriert, dass die Harzzusammensetzung bis auf den plattenförmigen Träger bzw. die auf diesen aufgebrachte Harzschicht durchschlägt. Darüber hat sich überraschender Weise gezeigt, dass mittels eines solchen Herstellungsverfahrens auf die Aufbringung eines Gegenzugs zur Vermeidung des Schüsseln der Dekorplatte verzichtet werden. Dies führt zu deutlichen ökonomischen Vorteilen, da zum einen auf den entsprechenden Arbeitsschritt verzichtet werden kann, zum anderen entsprechende Materialeinsparungen resultieren.
Dabei ist der erfindungsgemäß bereitgestellte Druckuntergrund sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet.

Gemäß einer Ausgestaltung des Verfahrens wird nach dem Kalandrieren der Papier- oder Vliesschicht auf den plattenförmigen Träger eine Harzzusammensetzung aufgebracht, welche als Feststoff wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulosefasern oder Mischungen dieser aufweist. Durch die Verwendung solcher Feststoffe kann insbesondere ein farbiger Druckuntergrund bereitgestellt werden, dessen Farbgebung eine den Dekordruck unterstützende Eigenschaft aufweist. So kann beispielsweise bei einer Dekorgestaltung, welche eine dunkle Holzart repräsentieren soll ein Druckuntergrund mit einem braunen oder bräunlichen Grundton aufgebracht werden, während bei einer Dekorgestaltung, welche eine helle Holzart oder einen hellen Stein repräsentieren soll ein Druckuntergrund mit einem gelben oder weißen Grundton aufgebracht werden. Die Verwendung von Zellulosefasern in der auf den plattenförmigen Träger aufgebrachten Harzzusammensetzung zeigt dabei insbesondere den vorteilhaften Effekt, dass etwaige Unregelmäßigkeiten auf der Trägerplattenoberfläche, auf welchen die Harzzusammensetzung aufgebracht wird, nicht mehr auf die später zu bedruckende Oberfläche durchschlagen, was zu einer deutlichen Verbesserung des Druckbildes führt. Solche Unregelmäßigkeiten können beispielsweise Schleifrillen von Schleifen der Trägerplatten oder Abdrücke durch Fördermittel, wie z.B. Transportbänder etc, sein. Bei der Verwendung von Zellulosefasern haben diese bevorzugt eine Korngröße im Bereich zwischen ≥10µm und ≤100µm, insbesondere zwischen ≥25µm und ≤90µm. Der Anteil der Zellulosefaser an dem in der Harzzusammensetzung enthaltenen Feststoff kann dabei beispielsweise in einem Bereich zwischen ≥0 Gew.-% und ≤100 Gew.-%., vorzugsweise zwischen ≥40 Gew.-% und ≤100 Gew.-%., insbesondere zwischen ≥60 Gew.-% und ≤100 Gew.-%. liegen. Dabei bewegt sich der bevorzugte Anteil an Feststoff in der Harzzusammensetzung bei der Verwendung von Zellulosefasern am unteren Ende des Gew.-% Bereichs, bevorzugt zwischen 0,5 Gew.-% und 3,5 Gew.-%, insbesondere zwischen 1,0 Gew.-% und 2,5 Gew.-%, wohingegen der bevorzugte Anteil an Feststoff in der Harzzusammensetzung bei den weiteren als beispielsweise geeignet aufgeführten Feststoffen bevorzugt zwischen ≥5 Gew.-% und ≤ 85 Gew.-%, vorzugsweise zwischen ≥10 Gew.-% und ≤ 80 Gew.-%, noch bevorzugter zwischen ≥35 Gew.-% und ≤ 75 Gew.-% liegt. Dies liegt insbesondere in dem geringen spezifischen Gewicht der als Feststoff zusetzbaren Zellulosefasern im Vergleich zu dem spezifischen Gewicht der weiteren aufgeführten Feststoffe begründet.
Insbesondere kann es dabei erfindungsgemäß vorgesehen sein, dass nach dem Kalandrieren eine Harzzusammensetzung aufgebracht wird, welche wenigstens ein organisches oder anorganisches Pigment ausgewählt aus der Gruppe bestehend aus Berlinerblau, Brillantgelb, Cadmiumgelb, Cadmiumrot, Chromoxidgrün, Cobaltblau, Cobaltcölinblau, Cobaltviolett, Irgazinrot, Eisenoxidschwarz, Manganviolett, Phthalocyaninblau, Terra di Siena, Titanweiß, Ultramarinblau, Ultramarinrot, Umbra, Kaolin, Zirkonium-Silicat-Pigmente, Monoazogelb und Monoazoorange, Thioindigo, beta-Naphthol-Pigmente, Naphthol AS-Pigmente, Pyrazolon-Pigmente, N-Acetessigsäureanilid-Pigmente, Azometallkomplex-Pigmente, Diaryl-Gelb-Pigmente, Chinacridon-Pigmente, Diketopyrrolo-pyrrol-Pigmente (DPP), Dioxazin-Pigmente, Perylen-Pigmente, Isoindolinon-Pigmente, Kupfer-Phthalocyanin-Pigmente und Mischungen dieser aufweist. Erfindungsgemäss ist vorgesehen, dass nach dem Kalandrieren eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Es hat sich überraschender Weise gezeigt, dass bei der Verwendung einer entsprechenden Harzkomponente in Kombination mit dem Feststoffanteil in der Harzzusammensetzung ein Druckuntergrund bereitgestellt werden kann, welcher eine deutlich verbesserte Haftung einer abschließend aufgebrachten Deck- und/oder Verschleißschicht ermöglicht, was zu einer verbesserten Stabilität des Laminates führt. Die Harzzusammensetzung kann dabei beispielsweise einen Harzanteil zwischen ≥15 Gew.-% und ≤95 Gew.-%, vorzugsweise zwischen ≥20 Gew.-% und ≤90 Gew.-%, noch bevorzugter zwischen ≥25 Gew.-% und ≤65 Gew.-% aufweisen.

Desweiteren kann es in einer Ausgestaltung des Verfahrens vorgesehen sein, dass nach dem Kalandrieren eine Harzzusammensetzung aufgebracht wird, welche einen Härter aufweist, wobei der Härter in der Harzzusammensetzung beispielsweise in einer Konzentration zwischen ≥0,05 Gew.-% und ≤3,0 Gew.-%, vorzugsweise ≥0,15 Gew.-% und ≤2,0 Gew.-%, noch bevorzugter zwischen ≥0,5 Gew.-% und ≤2,0 Gew.-% enthalten ist. Das Vorsehen eines Härters in der Harzzusammensetzung erlaubt es, das Abbinde- bzw. Aushärteverhalten der Harzzusammensetzung in Abhängigkeit zum auf den plattenförmigen Träger aufgebrachten Papier zu optimieren.

Gemäß einer Ausgestaltung des Verfahrens kann der Härter dabei beispielsweise eine Lösung organischer Salze seine. Bevorzugt weist der Härter dabei einen sauren pH-Wert, vorzugsweise zwischen ≥ pH 0,5 und < pH 7, vorzugsweise > pH 0,5 und ≤ pH 6 auf.

In einer besonders bevorzugten Ausgestaltung der Erfindung wird als Härter ein sogenannter latenter Härter eingesetzt. Latente Härter zeichnen sich dadurch aus, dass nach ihrem Zusatz zum Harz einerseits eine ausreichende Verarbeitungszeit bei Zimmertemperatur, andererseits eine möglichst kurze Härtungszeit bei den anschließenden Verarbeitungstemperaturen erzielt wird. Die Wirkung der latenten Härter beruht darauf, dass sie bei gewöhnlicher Temperatur unwirksam sind und erst bei erhöhter Wärme oder aufgrund einer chemischen Reaktion eine Säure freisetzen, die den Härtungsvorgang beschleunigt. Beispiele für latente Härter sind unter anderem Alkyl- oder Alkanolaminsalze der schwefeligen Säure, Amidosulfonsäure, 3-Chlor-1,2-propandiol, p-Toluolsulfonsäure, Morpholin, Ammoniumsulfat, Ammoniumchlorid, Ammoniumsulfit, Ammoniumnitrat, Ethanolaminhydrochlorid, Dimethylethanolammoniumsulfit, Diethanolammoniumsulfamat oder Maleinsäure.

Insbesondere kann es sich bei dem Härter um eine wässrige, bevorzugt nichtionogene Lösung handeln. Ein Beispiel für einen geeigneten Härter ist MH-180 B (Melatec AG, Schweiz).

Die Harzzusammensetzung kann nach dem Kalandrieren beispielsweise mit einer Auftragsmenge zwischen ≥5 g/m² und ≤50 g/m², vorzugsweise ≥10 g/m² und ≤40 g/m² aufgetragen werden. Gemäß einer weiteren Ausgestaltung kann die Harzzusammensetzung dabei auch in wenigstens zwei Auftragungsstufen aufgetragen werden.

Gemäß einer bevorzugten Ausgestaltung des Verfahrens kann es insbesondere vorgesehen sein, dass nach dem Kalandrieren eine Harzzusammensetzung mit einer Viskosität, die einer Auslaufzeit zwischen ≥7 s und ≤60 s aus einem Normauslaufbecher entspricht, aufgetragen wird. Die Viskosität ist bei gemäß DIN 53211 mittels eines Auslaufbechers mit einer Auslaufdüsenweite von 4mm bestimmt.

Nach dem Auftrag der Harzzusammensetzung im Anschluss an das Kalandrien folgt bevorzugt ein Trocknungsschritt, bei welchem die anschließend zu bedruckende Oberfläche zumindest teilweise getrocknet wird. Dazu kann es vorgesehen sein, dass auf der Oberfläche, auf welche die Harzzusammensetzung aufgetragen wurde, eine Oberflächentemperatur zwischen ≥75°C und ≤125 °C, vorzugsweise zwischen ≥80°C und ≤110 °C, insbesondere zwischen ≥90°C und ≤100 °C erzeugt wird. Zur Erzeugung einer entsprechenden Oberflächentemperatur sind beispielsweise IR-Strahler, NIR-Strahler, Düsentrockner oder vergleichbare Einrichtungen geeignet. Die genannte Oberflächentemperatur wird dabei bevorzugt für einen Zeitraum zwischen ≥1 s und ≤600 s, vorzugsweise zwischen ≥5s und ≤400s, noch bevorzugter zwischen ≥10 s und ≤300 s eingestellt.

Die nach dem Kalandrieren aufgebrachte Harzzusammensetzung kann neben den zuvor genannten Bestandteilen weiter Bestandteile bzw. Additive wie beispielsweise Rheologiemittel zur Einstellung der Viskosität, Wasser, Fließverbesserer, Konservierungsmittel, Tenside, Schaumverhinderer oder dergleichen enthalten.

In dem erfindungsgemäßen Verfahren kann sowohl der Auftrag einer Harzzusammensetzung auf den plattenförmigen Träger, als auch der Auftrag einer Harzzusammensetzung auf das auf den plattenförmigen Träger aufgebrachte Papier oder Vlies nach dem Kalandrien mittels Auftragswalzen, einer Sprüheinrichtung, Rakeln, Blade-Coating, Luftbürsten, Gussstricheinrichtungen, Schlitzdüsen, Gießvorhang oder anderer geeigneter Vorrichtungen erfolgen.

Gemäß einer weiter bevorzugten Ausgestaltung des Verfahrens wird vor dem Aufbringen der Harzschicht in Schritt b) ein Härter auf den plattenförmigen Träger aufgebracht. Dabei wird weiter bevorzugt ein saurer Härter, beispielsweise mit einem pH-Wert zwischen ≥ pH 0,5 und < pH 7, bevorzugt > pH 0,5 und ≤ pH 6 auf den plattenförmigen Träger aufgebracht. Der Härter ist reaktive gegenüber bzw. nimmt Einfluss auf die Aushärtungsreaktion der im Anschluss aufzubringenden Harzzusammensetzung, mit welcher eine Papier- oder Vliesschicht auf dem plattenförmigen Träger befestigt werden soll.

Weiter kann es vorgesehen sein, dass nach dem Auftrag des Härters auf den plattenförmigen Träger eine Wärmebehandlung erfolgt, durch welcher die Temperatur der Oberfläche des plattenförmigen Trägers erhöht wird, vorzugsweise auf eine Temperatur zwischen ≥35°C und ≤90°C. Eine solche Wärmebehandlung kann beispielsweise mittel IR-Strahlern oder auch NIR-Strahlern (Nah-Infrarot) erfolgen.

Zur Aufbringung der Harzschicht in Schritt b) kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥5 g/m² und ≤50 g/m², vorzugsweise ≥10 g/m² und ≤40 g/m² aufgetragen werden. Besonders bevorzugt wird die Auftragsmenge der Harzzusammensetzung dabei so gewählt, dass das im anschließenden Schritt c) aufgebrachte Papier oder Vlies nicht vollständig mit der Harzzusammensetzung durchtränkt wird. Dazu kann es beispielsweise auch vorgesehen sein, dass die Harzzusammensetzung in Schritt b) mit einer kinematischen Viskosität, die einer Auslaufzeit zwischen ≥ 10 s und ≤ 40s aus einem Norm-Auslaufbecher (gemessen gemäß DIN 53211) entspricht, aufgetragen wird.

Gemäß einer weiteren Ausgestaltung des Verfahrens wird in Schritt c) ein Papier oder Vlies mit einer Grammatur zwischen ≥30 g/m² und ≤80 g/m², vorzugsweise zwischen ≥40 g/m² und ≤70 g/m² auf den plattenförmigen Träger aufgebracht.

Gemäß einer Ausgestaltung des Verfahrens wird auf der der Dekorseite gegenüberliegenden Seite ein Gegenzug aufgebracht. Dabei ist es insbesondere bevorzugt, dass der Gegenzug in einem gemeinsamen Kalandrierschritt mit den Papier oder Vlies auf der Dekorseite aufgebracht wird.

In einer weiteren Ausgestaltung der Erfindung kann es vorgesehen sein, dass ein Gegenzug erst nach dem aufbringen des Dekorbildes auf die der Dekorschicht gegenüberliegenden Seite des plattenförmigen Trägers aufgebracht wird. Dabei kann es insbesondere vorgesehen sein, dass der Gegenzug in einem gemeinsamen Arbeitsschritt mit der Aufbringung eines Overlays als Deck- und/oder Verschleißschicht aufgebracht wird.

Insbesondere ist es jedoch im Rahmen der Erfindung bevorzugt, wenn auf das Aufbringen eines Gegenzuges verzichtet wird. Es hat sich nämlich überraschender Weise gezeigt, dass mittels eines solchen Herstellungsverfahrens auf die Aufbringung eines Gegenzugs verzichtet werden kann, ohne das ein Schüsseln der Dekorplatte auftritt. Dies führt zu deutlichen ökonomischen Vorteilen, da zum einen auf den entsprechenden Arbeitsschritt verzichtet werden kann, zum anderen entsprechende Materialeinsparungen resultieren.

Nach der Aufbringung des Druckuntergrundes auf die Dekorseite kann ein Dekor mittels geeigneter Druckverfahren aufgebracht werden, wobei Flexo-Druck, Offset-Druck oder Siebdruckverfahren, als auch insbesondere Digitaldrucktechniken, wie beispielsweise Inkjet-Verfahren oder Laserdruck-Verfahren geeignet.

Bevorzugt wird zur Aufbringung der Dekorschicht mittels Direktdruckverfahren eine strahlungshärtbare Farbe und/oder Tinte eingesetzt. Strahlungshärtbar bedeutet dabei im Sinne der Erfindung, dass die Farbe und/oder Tinte mit elektromagnetischer Strahlung, wie z.B. UV-Strahlung oder Elektronenstrahlung gehärtet wird. Dabei kann es insbesondere vorgesehen sein, dass die Farbe und/oder Tinte entsprechende strahlungs- bzw. photoinduziert polymerisierende Bestandteile aufweist. Beispiele für geeignete Bestandteile sind Acrylate, Epoxide oder cyclische Amine, wie z.B. Ethylenimin.

Zum Schutz der aufgebrachten Dekorschicht kann eine Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt. Dabei kann es vorgesehen sein, dass die Verschleißschicht Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Verschleißschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Verschleißschichtzusammensetzung eine stabile Dispersion ausbildet und eine Entmischung bzw. ein Absetzten des Hartstoffes in der Verschleißschichtzusammensetzung vermieden werden kann. Zur Ausbildung einer entsprechenden Verschleißschicht ist es in einer Ausgestaltung der Erfindung vorgesehen, dass die Hartstoff enthaltende und strahlungshärtbare Zusammensetzung in einer Konzentration zwischen 10 g/m² und 300 g/m², vorzugsweise zwischen 50 g/m² und 250g/m² aufgetragen wird. Dabei kann die Auftragung beispielsweise mittels Walzen, wie Gummiwalzen oder mittels Gießvorrichtungen aufgetragen werden. In einer weiteren Ausgestaltung der Erfindung kann es vorgesehen sein, dass der Hartstoff zum Zeitpunkt des Auftrages der Verschleißschichtzusammensetzung nicht in der Zusammensetzung enthalten ist, sondern als Partikel auf die aufgetragenen Verschleißschichtzusammensetzung aufgestreut wird und diese im Anschluss gehärtet wird.

Desweiteren kann es vorgesehen, dass in die Verschleiß- oder Deckschicht eine mit dem Dekor übereinstimmende Oberflächenstrukturierung eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Gemäß einer weiteren Ausgestaltung der Erfindung ist es vorgesehen, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalz oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

Darüber hinaus kann es vorgesehen sein, dass die Verschleiß- und/oder Deckschicht als strahlungshärtebare oder zumindest teilweise strahlungshärtebare Zusammensetzung, beispielsweise auf Basis einen Acrylat-Lackes, eines Epoxid-Lackes, oder eines Urethanacrylates aufgetragen wird. Dabei kann es insbesondere bevorzugt sein, dass die Zusammensetzung nach dem Auftrag auf die Dekorschicht in einem ersten Schritt strahlungsinduziert nur teilweise gehärtet wird und in teilgehärtete Schicht in der zuvor beschriebenen Weise eine mit dem Dekor übereinstimmende Oberflächenstrukturierung eingebracht wird.

Gemäß einer weiteren Ausgestaltung der Erfindung kann die Deck- und/oder Verschleißschicht Mittel zur Verringerung der statischen (elektrostatischen) Aufladung des letztendlichen Laminates aufweisen. Beispielsweise kann es dazu vorgesehen sein, dass die Deck- und/oder Verschleißschicht Verbindungen wie z.B. Cholinchlorid aufweist. Das Antistatikmittel kann dabei beispielsweise in einer Konzentration zwischen ≥0,1 Gew.-% und ≤40,0 Gew.-%, bevorzugt zwischen ≥1,0 Gew.-% und ≤30,0 Gew.-% in der Deck- und/oder Zusammensetzung zur Ausbildung Verschleißschicht enthalten sein.

In einer weiteren Ausgestaltung des erfindungsgemäßen Verfahrens kann es vorgesehen sein, dass die Strukturierung im Zuge des Druckverfahrens erzeugt wird. Hierzu kann es beispielsweise vorgesehen sein, dass ein mehrfacher Farbauftrag in der Weise erfolgt, dass über den Druckuntergrund erhabene Bereiche entstehen, welche eine gewünschte dreidimensionale Struktur ergeben. Auf die so erzeugte Struktur kann dann eine Verschleiß- und/oder Deckschicht aufgebracht werden.

Darüber hinaus wird mit der vorliegenden Erfindung ein direkt bedrucktes Dekorpaneel vorgeschlagen, aufweisend einen plattenförmigen Träger, eine auf den plattenförmigen Träger aufgebrachte Harzschicht, eine Schicht aus einen nicht imprägnierten und unbedruckten Papier oder Vlies, ein auf die Papier- oder Vliesschicht aufgebrachten Druckuntergrund, eine auf den Druckuntergrund aufgebrachte Farbschicht und eine zumindest auf die Farbschicht aufgebrachte Deck- und/oder Verschleißschicht, welches dadurch gekennzeichnet ist, dass der Druckuntergrund aus einer Harzzusammensetzung gebildet ist, welche zwischen ≥0,5 Gew.-% und ≤ 85 Gew.-%, vorzugsweise zwischen ≥1,0 Gew.-% und ≤ 80 Gew.-% eines Feststoffes mit einem mittleren Korndurchmesser d₅₀ zwischen ≥0, 1µm und ≤120µm aufweist, wobei die Harzzusammensetzung als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser in einer Konzentration zwischen ≥15 Gew.-% und ≤95 Gew.-%, vorzugsweise zwischen ≥20 Gew.-% und ≤90 Gew.-% und einen Härter in einer Konzentration zwischen ≥0,05 Gew.-% und ≤2,0 Gew.-%, vorzugsweise ≥0,15 Gew.-% und ≤1,0 Gew.-% aufweist.

In einer bevorzugten Ausgestaltung des erfindungsgemäßen Dekorpaneels weist dieses auf der der bedruckten Seite gegenüberliegenden Seite des plattenförmigen Trägers keinen Gegenzug auf. Ein solches gegenzugfreies Paneel ist durch die Material- und Arbeitsschrittersparnis insbesondere kostengünstiger herstellbar und bietet somit neben ökologischen Vorteilen der Ressourcenschonung auch ökonomische Vorteile.

Gemäß einer weiteren Ausgestaltung der Erfindung kann der plattenförmige Träger zumindest in einem Randbereich eine Profilierung aufweisen. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder Ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.
Fig. 1 zeigt den schematischen Aufbau einer Ausgestaltung eines Dekorpaneels gemäß der Erfindung;
Fig. 2 zeigt den schematischen Aufbau einer Ausgestaltung eines erfindungsgemäß hergestellten Dekorpaneels ohne Gegenzug.

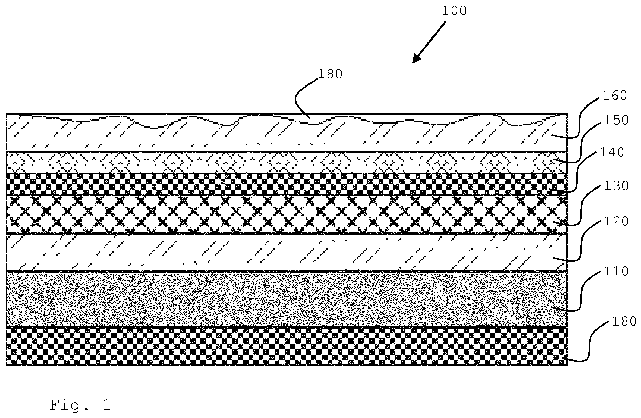

Fig. 1 zeigt den schematischen Aufbau einer Ausgestaltung eines Dekorpaneels 100 gemäß der Erfindung. Auf einen plattenförmigen Träger 110, auf welchen zunächst ein Härter (hier nicht sichtbar) aufgebracht wurde, ist eine Harzschicht 120 angeordnet, mit welcher eine Papier- oder Vliesschicht 130 auf dem plattenförmigen Träger 110 befestigbar ist. Auf die Papier- oder Vliesschicht 130 ist ein Druckuntergrund 140 aufgebracht. Dabei wird der Druckuntergrund 140 aus einer Harzzusammensetzung gebildet, welche zwischen ≥0,5 Gew.-% und ≤85 Gew.-%, vorzugsweise zwischen ≥1,5 Gew.-% und ≤80 Gew.-% eines Feststoffes mit einem mittleren Korndurchmesser d₅₀ zwischen ≥0,1µm und ≤120µm aufweist. Als Feststoff kann dabei wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulosefasern oder Mischungen dieser in der Harzzusammensetzung enthalten sein. Besonders bevorzugt enthält die Harzzusammensetzung zumindest Titandioxid oder Zellulosefasern als Feststoff. Der Druckuntergrund 140 ist auf das erfindungsgemäße Dekorpaneel 100 erst im Anschluss an einen Kalandrierschritt aufgebracht, in welchem die Papier- oder Vliesschicht 130 unter Einwirkung von Druck und/oder Wärme auf die auf den plattenförmigen Träger 110 aufgebrachte Harzschicht 120 aufgepresst wird. Dabei dringt die Harzzusammensetzung der Harzschicht 120 bevorzugt lediglich teilweise in die Papier- oder Vliesschicht 130 ein und penetriert diese nicht vollständig. Auf den so hergestellten Druckuntergrund ist eine Farbschicht 150 aufgebracht, welche ein Dekor ausbildet. Auf die Farbschicht 150 ist eine Deck- und/oder Verschleißschicht 160 aufgebracht. Dabei kann die Deck- und/oder Verschleißschicht haptisch wahrnehmbare Strukturen 170 aufweisen, welche bevorzugt mit dem durch die Farbschicht 150 ausgebildeten Dekor in der Weise übereinstimmen, dass der Eindruck eines naturähnlichen Materials entsteht. Auf der gegenüberliegenden Seite ist in der gezeigten Ausgestaltung ein Gegenzug 180 aufgebracht.

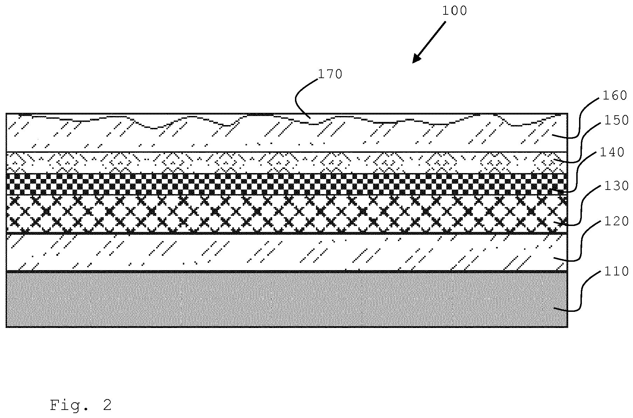

Fig. 2 zeigt den schematischen Aufbau einer Ausgestaltung eines Dekorpaneels 100 gemäß der Erfindung, welches frei von einem Gegenzug ist. Auf einen plattenförmigen Träger 110, auf welchen zunächst ein Härter (hier nicht sichtbar) aufgebracht wurde, ist eine Harzschicht 120 angeordnet, mit welcher eine Papier- oder Vliesschicht 130 auf dem plattenförmigen Träger 110 befestigbar ist. Auf die Papier- oder Vliesschicht 130 ist ein Druckuntergrund 140 aufgebracht. Dabei wird der Druckuntergrund 140 aus einer Harzzusammensetzung gebildet, welche zwischen ≥1 Gew.-% und ≤85 Gew.-%, vorzugsweise zwischen ≥2,5 Gew.-% und ≤80 Gew.-% eines Feststoffes mit einem mittleren Korndurchmesser d₅₀ zwischen ≥0, 1µm und ≤120µm aufweist. Als Feststoff kann dabei wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulosefasern oder Mischungen dieser in der Harzzusammensetzung enthalten sein. Besonders bevorzugt enthält die Harzzusammensetzung zumindest Zellulosefasern als Feststoff. Der Druckuntergrund 140 ist auf das erfindungsgemäße Dekorpaneel 100 erst im Anschluss an einen Kalandrierschritt aufgebracht, in welchem die Papier- oder Vliesschicht 130 unter Einwirkung von Druck und/oder Wärme auf die auf den plattenförmigen Träger 110 aufgebrachte Harzschicht 120 aufgepresst wird. Dabei dringt die Harzzusammensetzung der Harzschicht 120 bevorzugt lediglich teilweise in die Papier- oder Vliesschicht 130 ein und penetriert diese nicht vollständig. Auf den so hergestellten Druckuntergrund ist eine Farbschicht 150 aufgebracht, welche ein Dekor ausbildet. Auf die Farbschicht 150 ist eine Deck- und/oder Verschleißschicht 160 aufgebracht. Dabei kann die Deck- und/oder Verschleißschicht haptisch wahrnehmbare Strukturen 170 aufweisen, welche bevorzugt mit dem durch die Farbschicht 150 ausgebildeten Dekor in der Weise übereinstimmen, dass der Eindruck eines naturähnlichen Materials entsteht. Auf eine Aufbringung eines Gegenzuges wird bei einem so ausgestalteten Dekorpaneel explizit verzichtet, da sich gezeigt hat, dass der erfindungsgemäße Druckuntergrund 140 den Aufbau eines Dekorpaneels erlaubt, welches auch ohne das Vorsehen eines Gegenzuges keine Tendenz des Schüsselns, also der konkaven Oberflächenverformung, zeigt.

### Bezugszeichen:

- 100: Dekorplatte
- 110: plattenförmiger Träger
- 120: Harzschicht
- 130: Papier-/Vliesschicht
- 140: Druckuntergrund
- 150: Farbschicht
- 160: Deck-/Verschleißschicht
- 170: Struktur
- 180: Gegenzug

## Patentansprüche

1. Verfahren zur Herstellung eines Druckuntergrundes (140) zum Direktdruck auf einem Dekorpaneel (100), aufweisend die Verfahrensschritt:
a) Bereitstellen eines plattenförmigen Trägers (110);
b) Aufbringen einer Harzschicht auf den plattenförmigen Träger (120);
c) Aufbringen einer Papier- oder Vliesschicht (130) auf den plattenförmigen Träger (110); und
d) Kalandrieren des entstandenen Schichtenaufbaus bei einer Temperatur zwischen ≥ 40° und ≤ 250°C, **dadurch gekennzeichnet,**
**dass** nach dem Kalandrieren eine Harzzusammensetzung aufgebracht wird, welche zwischen ≥0,5 Gew.-% und ≤85 Gew.-%, vorzugsweise zwischen ≥1,0 Gew.-% und ≤80 Gew.-% eines Feststoffes mit einem mittleren Korndurchmesser d₅₀ zwischen ≥0,1 µm und ≤120 µm und als Harzkomponente wenigstens eine Verbindung ausgewählt aus der Gruppe bestehend aus Melaminharz, Formaldehydharz, Harnstoffharz oder Mischungen dieser aufweist.

2. Verfahren gemäß Anspruch 1, wobei nach dem Kalandrieren eine Harzzusammensetzung aufgebracht wird, welche als Feststoff wenigstens eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulose oder Mischungen dieser aufweist.

3. Verfahren gemäß einem der vorhergehenden Ansprüche, wobei nach dem Kalandrieren eine Harzzusammensetzung aufgebracht wird, welche einen Harzanteil zwischen ≥15 Gew.-% und ≤ 95 Gew.-%, vorzugsweise zwischen ≥20 Gew.-% und ≤ 90 Gew.-% aufweist.

4. Verfahren gemäß einem der vorhergehenden Ansprüche, wobei nach dem Kalandrieren eine Harzzusammensetzung aufgebracht wird, welche einen Härter aufweist, wobei der Härter in der Harzzusammensetzung in einer Konzentration zwischen ≥0,05 Gew.-% und ≤2,0 Gew.-%, vorzugsweise ≥0,15 Gew.-% und ≤1,0 Gew.-% enthalten ist.

5. Verfahren gemäß einem der vorhergehenden Ansprüche, wobei nach dem Kalandrieren die Harzzusammensetzung mit einer Auftragsmenge zwischen ≥5 g/m² und ≤50 g/m², vorzugsweise ≥10 g/m² und ≤40 g/m² aufgetragen wird.

6. Verfahren gemäß einem der vorhergehenden Ansprüche, wobei vor dem Aufbringen einer Harzschicht auf den plattenförmigen Träger (110) in Schritt b) ein Härter auf den plattenförmigen Träger (110) aufgebracht wird.

7. Verfahren gemäß Anspruch 6, wobei die mit dem Härter beaufschlagte Oberfläche des plattenförmigen Trägers (110) erwärmt wird, vorzugsweise auf eine Oberflächentemperatur zwischen ≥35°C und ≤90°C.

8. Verfahren gemäß einem der vorhergehenden Ansprüche, wobei in Schritt c) ein Papier oder Vlies mit einer Grammatur zwischen ≥30 g/m² und ≤80 g/m², vorzugsweise zwischen ≥40 g/m² und ≤70 g/m² auf den plattenförmigen Träger (110) aufgebracht wird.

9. Verfahren nach einem der vorhergehenden Ansprüche, weiterhin ausweisend die Verfahrensschritte:
e) Aufbringen einer Dekorschicht (150) auf den Druckuntergrund (140) mittels Direktdruck; und
f) Aufbringen eines Verschleißschutzes (160) auf die Dekorschicht (150).

10. Verfahren gemäß Anspruch 9, wobei die Dekorschicht in Schritt e) mittels Flexo-Druck, Offset-Druck, Siebdruckverfahren, Inkjet-Verfahren oder Laserdruck-Verfahren aufgebracht wird.

11. Verfahren gemäß Anspruch 9 oder 10, wobei zur Aufbringung der Dekorschicht (150) eine strahlungshärtbare Farbe und/oder Tinte auf die Papier- oder Vliesschicht aufgetragen wird.

12. Verfahren gemäß einem der vorhergehenden Ansprüche, wobei als Deck- und/oder Verschleißschicht (160) eine zumindest teilweise strahlungshärtbare Zusammensetzung aufgebracht wird.

13. Direkt bedrucktes Dekorpaneel (100), aufweisend einen plattenförmigen Träger (110), eine auf den plattenförmigen Träger (110) aufgebrachte Harzschicht (120), eine Schicht (130) aus einen unbedruckten Papier oder Vlies, ein auf die Papier- oder Vliesschicht (130) aufgebrachten Druckuntergrund (140), eine auf den Druckuntergrund (140) aufgebrachte Farbschicht (150) und eine zumindest auf die Farbschicht (150) aufgebrachte Deck- und/oder Verschleißschicht (160), **dadurch gekennzeichnet, dass** der Druckuntergrund (140) aus einer Harzzusammensetzung gebildet ist, welche zwischen ≥ 0,5 Gew.-% und ≤ 85 Gew.-%, vorzugsweise zwischen ≥1,0 Gew.-% und ≤80 Gew.-% eines Feststoffes mit einem mittleren Korndurchmesser d₅₀ zwischen ≥0,1µm und ≤120µm aufweist, wobei die Harzzusammensetzung als Harzkomponente wenigstens eine Verbindung ausgewählt aus der Gruppe bestehend aus Melaminharz, Formaldehydharz, Harnstoffharz oder Mischungen dieser in einer Konzentration zwischen ≥15 Gew.-% und ≤ 95 Gew.-%, vorzugsweise zwischen ≥20 Gew.-% und ≤90 Gew.-% und einen Härter in einer Konzentration zwischen ≥0,05 Gew.-% und ≤2,0 Gew.-%, vorzugsweise ≥0,15 Gew.-% und ≤1,0 Gew.-% aufweist.

14. Direkt bedrucktes Dekorpaneel gemäß Anspruch 13, wobei dieses auf der der bedruckten Seite gegenüberliegenden Seite des plattenförmigen Trägers (110) frei von einem Gegenzug ist.

15. Dekorpaneel gemäß Anspruch 13 oder 14, wobei dieser zumindest in einen Randbereich des plattenförmigen Trägers (110) eine Profilierung aufweist.

## Claims

1. Method for producing a printing undercoat (140) for direct printing on a decorative panel, comprising the steps of:
a) providing a plate-shaped carrier (110);
b) applying a resin layer onto the plate-shaped carrier (110);
c) applying a paper or a non-woven layer (130) onto the plate-shaped carrier (110); and
d) calendering the resulting laminate structure at a temperature between ≥ 40° and ≤ 250°C,
**characterized in that**
subsequently to the calendering step a resin composition is applied which includes between ≥ 0.5 wt.-% and ≤ 85 wt.-%, preferably between ≥ 1.0 wt.-% and ≤ 80 wt.-% of a solid having an average grain diameter d₅₀ between ≥ 0.1 µm and ≤ 120 µm and as a resin component at least one compound selected from the group consisting of melamine resin, formaldehyde resin, urea resin or mixtures thereof.

2. Method according to claim 4, wherein after the calendering step a resin composition is applied, which as a solid at least comprises one compound selected from the group consisting of titanium dioxide, barium sulphate, barium oxide, barium chromate, zirconium(IV)oxide, silica, aluminum hydroxide, aluminum oxide, iron oxide, iron(III)hexacyanoferrate, chromium oxide, cadmium oxide, cadmium sulphide, cadmium selenite, cobalt oxide, cobalt phosphate, cobalt aluminate, vanadium oxide, bismuth vanadium oxide, tin oxide, copper oxide, copper sulphate, copper carbonate, lead antimonate, lead chromate, lead oxide, lead carbonate, calcium carbonate, calcium sulphate, calcium aluminate sulphate, zinc oxide, zinc sulphide, arsenic sulphide, mercury sulphide, carbon black, graphite, cellulose or mixtures thereof.

3. Method according to any one of the preceding claims, wherein subsequently to the calendering step a resin composition is applied which has a resin content between ≥ 15 and ≤ 95 wt.-%, preferably between ≥ 20 wt.-% and ≤ 90 wt.-%.

4. Method according to any one of the preceding claims, wherein subsequently to the calendering step a resin composition is applied which comprises a curing agent, wherein the curing agent is present in the resin composition in a concentration between ≥ 0.05 wt.-% and ≤ 2.0 wt.-%, preferably ≥ 0.15 wt.-% and ≤ 1.0 wt.-%.

5. Method according to any one of the preceding claims, wherein subsequently to the calendering step a resin composition is applied in an application amount between ≥ 5 g/m² and ≤ 50 g/m², preferably ≥ 10 g/m² and ≤ 40 g/m².

6. Method according to any one of the preceding claims, wherein prior to the application of a resin layer onto the plate-shaped carrier (110) in step b) a curing agent is applied onto the plate-shaped carrier (110).

7. Method according to claim 6, wherein the surface area of the plate-shaped carrier (110) supplied with the curing agent is heated preferably to a surface temperature between ≥ 35°C and ≤ 90°C.

8. Method according to any one of the preceding claims, wherein in step c) a paper or a nonwoven fabric with a grammage between ≥ 30 g/m² and ≤ 80 g/m², preferably between ≥ 40 g/m² and ≤ 70 g/m², is applied onto the plate-shaped carrier (110).

9. Method according to any one of the preceding claims, further comprising the steps of:
e) applying a decorative layer (150) onto the printing undercoat (140) by means of direct printing; and
f) applying a wear-protection layer (160) onto the decorative layer (150).

10. Method according to claim 9, wherein the decorative layer (150) is applied in step e) by means of flexo printing, offset printing, screen printing processes, inkjet processes or laser printing processes.

11. Method according to claim 9 or 10, wherein for the application of the decorative layer (150) a radiation curable paint and/or ink is applied onto the paper or non-woven layer.

12. Method according to any one of the preceding claims, wherein as a top and/or wear-protection layer (160) an at least partially radiation curable composition is applied.

13. Direct printed decorative panel (100) comprising a plate-shaped carrier (110), a resin layer (120) applied onto the plate-shaped carrier (110), a layer (130) made of an unprinted paper or nonwoven fabric, a printing undercoat (140) applied onto the paper or nonwoven layer (130), a paint layer (150) applied onto the printing undercoat (140) and at least one top and/or wear-protection layer (160) applied onto the paint layer (150)
**characterized in that**
the printing undercoat (140) is composed of a resin composition comprising between ≥ 0.5 wt.-% and ≤ 85 wt.-%, preferably ≥ 1.0 wt.-% and ≤ 80 wt.-% of a solid having an average grain diameter d₅₀ between ≥ 0.1 µm and ≤ 120 µm, wherein the resin composition as a resin component includes at least one compound selected from the group consisting of melamine resin, formaldehyde resin, urea resin or mixtures thereof in a concentration between ≥ 15 and ≤ 95 wt.-%, preferably between ≥ 20 wt.-% and ≤ 90 wt.-%, and a curing agent in a concentration between ≥ 0.05 wt.-% and ≤ 2.0 wt.-%, preferably ≥ 0.15 wt.-% and ≤ 1.0 wt.-%.

14. Decorative panel according to claim 13, wherein the decorative panel is free of a backing layer on a side of the plate-shaped carrier (110) opposite to the printed side.

15. Decorative panel according to claim 13 or 14, wherein the decorative panel has a profiling in an edge region of the plate-shaped carrier (110).

## Revendications

1. Procédé de fabrication d'un substrat d'impression (140) pour l'impression directe sur un panneau décoratif (100), présentant les étapes de procédé :
a) mise à disposition d'un support (110) en forme de plaque ;
b) dépôt d'une couche de résine sur le support (120) en forme de plaque ;
c) dépôt d'une couche de papier ou de non tissé (130) sur le support (110) en forme de plaque ; et
d) calandrage de la structure en couches résultante à une température entre ≥ 40 ° et ≤ 250 °C, **caractérisé en ce**
**qu'**après le calandrage, une composition à base de résine est rapportée, laquelle présente entre ≥ 0,5 % en poids et ≤ 85 % en poids, de préférence, entre ≤ 1,0 % en poids et ≤ 80 % en poids, d'une charge solide avec un diamètre moyen de grain d₅₀ entre ≥ 0,1 µm et ≤ 120 µm et en tant que composant à base de résine au moins un composé choisi dans le groupe constitué d'une résine mélamine, d'une résine formaldéhyde, d'une résine d'urée ou des mélanges de celles-ci.

2. Procédé selon la revendication 1, dans lequel, après le calandrage, une composition à base de résine est rapportée, laquelle présente en tant que charge solide, au moins un composé du groupe constitué du dioxyde de titane, du sulfate de baryum, de l'oxyde de baryum, du chromate de baryum, de l'oxyde de zirconium (IV), du dioxyde de silicium, de l'hydroxyde d'aluminium, de l'oxyde d'aluminium, de l'oxyde de fer, de l'hexacyanoferrate de fer (III), de l'oxyde de chrome, de l'oxyde de cadmium, du sulfure de cadmium, du séléniure de cadmium, de l'oxyde de cobalt, du phosphate de cobalt, de l'aluminate de cobalt, de l'oxyde de vanadium, de l'oxyde de bismuth et vanadium, de l'oxyde d'étain, de l'oxyde de cuivre, du sulfate de cuivre, du carbonate de cuivre, de l'antimoniate de plomb, du chromate de plomb, de l'oxyde de plomb, du carbonate de plomb, du carbonate de calcium, du sulfate de calcium, de l'alumino-sulfate de calcium, de l'oxyde de zinc, du sulfure de zinc, du sulfure d'arsenic, du sulfure de mercure, de la suie, du graphite, de la cellulose ou de mélanges de ceux-ci

3. Procédé selon l'une des revendications précédentes, dans lequel, après le calandrage, une composition à base de résine, laquelle présente une proportion de résine entre ≥ 15 % en poids et ≤ 95 % en poids, de préférence, entre ≥ 20 % en poids et ≤ 90 % en poids, est rapportée.

4. Procédé selon l'une des revendications précédentes, dans lequel, après le calandrage une composition à base de résine, laquelle présente un durcisseur, où le durcisseur est contenu dans la composition à base de résine à une concentration entre ≥ 0,05 % en poids et ≤ 2,0 % en poids, de préférence, entre ≥ 0,15 % en poids et ≤ 1,0 % en poids, est rapportée.

5. Procédé selon l'une des revendications précédentes, dans lequel, après le calandrage, la composition à base de résine est déposée avec une quantité déposée entre ≥ 5 g/m² et ≤ 50g/m², de préférence, ≤ 10 g/m² et ≤ 40 g/m².

6. Procédé selon l'une des revendications précédentes, dans lequel, avant le dépôt de la couche de résine sur le support (110) en forme de plaque dans l'étape b), un durcisseur est rapporté sur le support (110) en forme de plaque.

7. Procédé selon la revendication 6, dans lequel la surface du support (110) en forme de plaque revêtue avec le durcisseur est réchauffée, de préférence jusqu'à une température de surface entre ≤ 35 °C et ≤ 90 °C.

8. Procédé selon l'une des revendications précédentes, dans lequel, dans l'étape c), un papier ou un non tissé avec un grammage entre ≥ 30 g/m² et ≤ 80 g/m², de préférence entre ≥ 40 g/m² et ≤ 70 g/m² est rapporté sur le support (110) en forme de plaque.

9. Procédé selon l'une des revendications précédentes, présentant en outre les étapes de procédé :
e) application d'une couche décorative (150) sur le substrat d'impression (140) au moyen d'une impression directe ; et
f) application d'une protection contre l'usure (160) sur la couche décorative (150).

10. Procédé selon la revendication 9, dans lequel la couche décorative dans l'étape e) est rapportée au moyen d'une flexographie, d'une impression offset, d'un procédé de sérigraphie, d'un procédé par jet d'encre ou un procédé d'impression laser.

11. Procédé selon la revendication 9 ou 10, dans lequel, pour rapporter la couche décorative (150), une peinture durcissable par rayonnement et/ou une encre est rapportée sur la couche de papier ou de non tissé.

12. Procédé selon l'une des revendications précédentes, dans lequel, une composition au moins partiellement durcissable par rayonnement est rapportée en tant que couche de couverture et/ou de couche anti-usure.

13. Panneau décoratif (100) à impression directe, présentant un support (110) en forme de plaque, une couche de résine (120) rapportée sur le support (110) en forme de plaque, une couche (130) constituée de papier sans impression ou de non tissé, un substrat d'impression (140) rapporté sur la couche de papier ou de non tissé (130), une couche de peinture (150) rapportée sur le substrat d'impression (140) et au moins une couche de couverture et/ou anti-usure (160) rapportée sur la couche de peinture (150), **caractérisé en ce que** le substrat d'impression (140) est constitué d'une composition à base de résine, laquelle présente entre ≥ 0,5 % en poids et ≤ 85 % en poids, de préférence, entre ≤ 1,0 % en poids et ≤ 80 % en poids d'une charge solide avec un diamètre moyen de grain d₅₀ entre ≥ 0,1 µm et ≤ 120 µm, où la composition à base de résine présente en tant que composé à base de résine au moins un composé choisi dans le groupe constitué d'une résine mélamine, d'une résine de formaldéhyde, d'une résine d'urée ou de mélanges de celles-ci à une concentration entre ≥ 15 % en poids et ≤ 95 % en poids, de préférence, entre ≥ 20 % en poids et ≤ 90 % en poids et un durcisseur à une concentration entre ≥ 0,05 % en poids et ≤ 2,0 % en poids, de préférence, entre ≥ 0,15 % en poids et ≤ 1,0 % en poids.

14. Panneau décoratif à impression directe selon la revendication 13, dans lequel celui-ci est exempt d'une contre-impression sur le côté du support (110) en forme de plaque situé à l'opposé du côté imprimé.

15. Panneau décoratif selon la revendication 13 ou 14, dans lequel celui-ci présente au moins un profilé dans une région de bordure du support (110) en forme de plaque.
